Europäisches Patentamt

European Patent Office

Office européen des brevets

(19)

(11) **EP 1 282 331 B1**

(12) **EUROPEAN PATENT SPECIFICATION**

(45) Date of publication and mention
of the grant of the patent:
**28.09.2005 Bulletin 2005/39**

(51) Int Cl.[7]: **H04Q 11/04**, H04L 12/56,
H04Q 11/00

(21) Application number: **02250951.7**

(22) Date of filing: **12.02.2002**

(54) **Connection setup strategies in optical transport networks**

Verbindungsaufbau-Strategien in optischen Transportnetzwerken

Stratégies d' établissement de connexion dans des réseaux de transport optique

(84) Designated Contracting States:
**DE FR**

(30) Priority: **31.07.2001 US 919047**

(43) Date of publication of application:
**05.02.2003 Bulletin 2003/06**

(73) Proprietor: **LUCENT TECHNOLOGIES INC.**
**Murray Hill, New Jersey 07974-0636 (US)**

(72) Inventors:
• **Nagarajan, Ramesh**
**Somerset, New Jersey 08873 (US)**
• **Qureshi, Muhammad A.**
**Metuchen, New Jersey 08840 (US)**

(74) Representative:
**Watts, Christopher Malcolm Kelway et al**
**Lucent Technologies NS UK Ltd**
**5 Mornington Road**
**Woodford Green**
**Essex, IG8 0TU (GB)**

(56) References cited:
**EP-A- 0 752 795** **WO-A-01/19006**
**US-A- 6 128 305**

• **CIDON I ET AL: "CONNECTION
ESTABLISHMENT IN HIGH-SPEED NETWORK"
IEEE / ACM TRANSACTIONS ON NETWORKING,
IEEE INC. NEW YORK, US, vol. 1, no. 4, 1 August
1993 (1993-08-01), pages 469-481, XP000415370
ISSN: 1063-6692**
• **RAMASWAMI R ET AL: "DISTRIBUTED
NETWORK CONTROL FOR WAVELENGTH
ROUTED OPTICAL NETWORKS"
PROCEEDINGS OF IEEE INFOCOM 1996.
CONFERENCE ON COMPUTER
COMMUNICATIONS. FIFTEENTH ANNUAL
JOINT CONFERENCE OF THE IEEE COMPUTER
AND COMMUNICATIONS SOCIETIES.
NETWORKING THE NEXT GENERATION. SAN
FRANCISCO, MAR. 24 - 28, 1996, PROCEEDINGS
OF INFOCOM, L, vol. 1 CONF. 15, 24 March 1996
(1996-03-24), pages 138-147, XP000622304
ISBN: 0-8186-7293-5**
• **RAMASWAMI R ET AL: "DISTRIBUTED
NETWORK CONTROL FOR OPTICAL
NETWORKS" IEEE / ACM TRANSACTIONS ON
NETWORKING, IEEE INC. NEW YORK, US, vol. 5,
no. 6, 1 December 1997 (1997-12-01), pages
936-942, XP000734419 ISSN: 1063-6692**

## Description

### Technical Field

This invention relates generally to communications and, more particularly, to optical communications.

### Background of the Invention

A transport network typically comprises a number of nodes, connected by links, for transporting information (whether representing data or voice) over a connection path. The latter is setup between a source node and a destination node of the transport network and may also comprise a number of intermediate nodes. Typically, in order to establish this connection path, a "connection setup" takes place.

Connection setup between a source node and a destination node involves signaling to setup a cross-connect at every one of the intermediate nodes in the connection path. A node performs a cross-connect between link resources assigned to the connection. Link resources are, e.g., incoming port, incoming wavelength, outgoing port, outgoing wavelength, etc. (It should be noted that the particular link resources are assigned via local nodal decisions rather than by the source node, which simply computes the connection path. This is necessary to avoid coordinating resource assignments among non-neighboring nodes in the network.) The cross-connect signaling starts at the source node and progresses downstream through each intermediate node of the transport network to the destination node and back again, upstream, through each intermediate node to the source node. In particular, each intermediate node waits for the completion of all downstream cross-connects between it and the destination node before completing its cross-connect operation. Consequently, as the connection path length increases - the number of cross-connects increases - and connection setup time increases. For example, connection setup time for a large transport network, involving hundreds of cross-connects, could be on the order of a second. In addition, connection setup time also affects the restoration time of the transport network after a network failure (imagine a cable cut leading to the failure of hundreds of connections) since the connection setup must be performed, yet again, to restore service between the source node and the destination node.

WO-A-01/19 006 discloses a method and apparatus for channel provisioning in an optical wavelength division multiplexed (WDM) network and, more specifically, to a distributed protocol/framework for wavelength channel control (i.e., wavelength routing) in a WDM network. In the disclosed method and apparatus, higher layer clients associated with nodes use channel request messages to set up bandwidth channels between peer nodes.

### Summary of the Invention

A method and apparatus according to the invention are as set out in the independent claims. Preferred forms are set out in the dependent claims.

In accordance with the invention, during a connection setup between a source node and a destination node, a node of a transport network initiates a cross-connect with an adjacent node and completes the cross-connect with the adjacent node without waiting for completion of any downstream cross-connects. The success of the connection operation to the destination node is checked by the node on the reverse pass. This results in completely pipelining the various cross-connect operations at each node. As a result, the connection setup time is of the order of a round-trip delay plus a single cross-connect time (independent of the number of nodes in the connection path).

In an embodiment of the invention, an optical transport network comprises a number of nodes, or routers, which are coupled together via optical fibers. The optical transport network uses wavelength division multiplexing (WDM). The optical transport network is a distributed network, where, upon receipt of a connection request, each router initiates and completes a cross-connect with an adjacent router and does not wait for any downstream cross-connects to complete. Illustratively, the optical transport network uses an Internet Protocol (IP) control plane (out-of-band signaling on a separate wavelength) to set up the cross-connects. Each router verifies the success of the connection request by receipt of a completion message on the reverse pass.

### Brief Description of the Drawings

FIG. 1 shows an illustrative optical communications system embodying the principles of the invention;
FIGS. 3 - 6 show illustrative flow charts, embodying the principles of the invention, for use in the optical communications system of FIG. 1; and
FIG. 7 shows an illustrative high-level block diagram of a node in accordance with the principles of the invention.

### Detailed Description

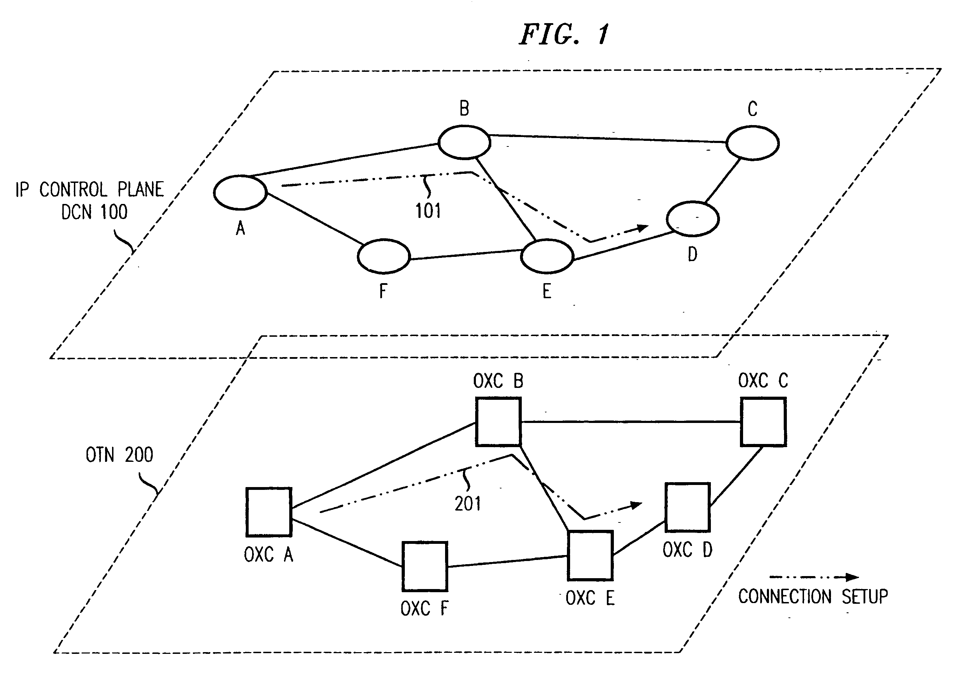

An illustrative optical communications system, in accordance with the principles of the invention is shown in FIG. 1. Other than the inventive concept, the elements shown in FIG. 1 are well known and will not be described in detail. For example, optical transport network (OTN) 200 is an optical transport network comprising a number of optical cross-connect (OXC) nodes (also referred to as OTN nodes, or simply "nodes"), e.g., OXC A, OXC B, OXC C, OXC D, OXC E and OXC F, having an illustrative OTN topology as shown. Also, although shown as a single block element, each node (e.g., OXC A) includes stored-program-control processors, memory, and appropriate interface cards (not shown in FIG. 1). Except as noted below, it is assumed that OTN 200 conforms to a synchronous optical network (SONET). (It should be noted that other elements such as gateways to provide access to, e.g., OTN 200, and user endpoints, are left off to simplify the description.) In addition, the inventive concept uses conventional programming techniques, which as such, will not be described herein.

As noted above, OTN 200 comprises OXC A, OXC B, OXC C, OXC D, OXC E and OXC F. The use of a signaling network (referred to herein as a control plane) is important for next generation intelligent optical networks for providing services like real time point-and-click provisioning of optical channels, optical layer protection and restoration, optical layer network topology auto-discovery and optical layer bandwidth management. For a number of reasons, such as easier feature enhancement and wider access of features to customers, the Internet Protocol (IP) has been emerging as the technology of choice to implement a control plane for OTNs. It is assumed that OTN 200 utilizes an IP-based control plane (out-of-band signaling on a separate wavelength) as represented by data communications network (DCN) 100. (An IP-based control plane is, in essence, another packet transport network for signaling messages - hence its representation as a DCN.) As such, DCN 100 comprises nodes A, B, C, D, E and F. (In effect, this is a logical separation since each node - physically - performs both transport and signaling.) DCN 100 is a packet transport network for all the signaling messages necessary for connection signaling (e.g., setup and teardown), failure notification and OAMP (operations, administration, maintenance and provisioning) messaging in OTN 200. (Other than the inventive concept, path computation, connection setup, cross-connects, and signaling messages in support thereof, are known in the art and will not be described herein.) DCN 100 utilizes any of a number of transport technologies such as, but not limited to, optical, SONET or Ethernet. This makes the DCN portable and applicable to any automatic switched transport network. Note, that in FIG. 1 DCN 100 and OTN 200 are illustrated as sharing the same topology. However, whether the DCN topology is independent of, or the same as, the OTN topology is not relevant to the inventive concept. Illustratively, it is assumed that multiprotocol label switching (MPLS) is used for the DCN network for explicitly routing control information along paths. (However, other routing protocols could also be used, such as open shortest path first (OSPF)). Also, for any optical path computation purposes, it is assumed that OTN topology information is passed to each DCN node through a link state exchange protocol as known in the art (e.g., the Link Management Protocol (LMP)).

In accordance with the inventive concept, it is important to pipeline or perform operations in parallel as much as possible for fast connection setup. In the context of this invention, pipelining refers to operations across the network, i.e., "network pipelining." Network pipelining is illustratively realized by having a forward pass (from a source node to a destination node) in the connection setup that simply initiates the cross-connect - but does not wait for it to complete. The success of the cross-connect operation is then checked on the reverse pass (from the destination node to the source node). This results in completely pipelining the cross-connect operation. Connection setup is of the order of a round-trip delay plus a single cross-connect time (independent of the number of nodes in the connection path).

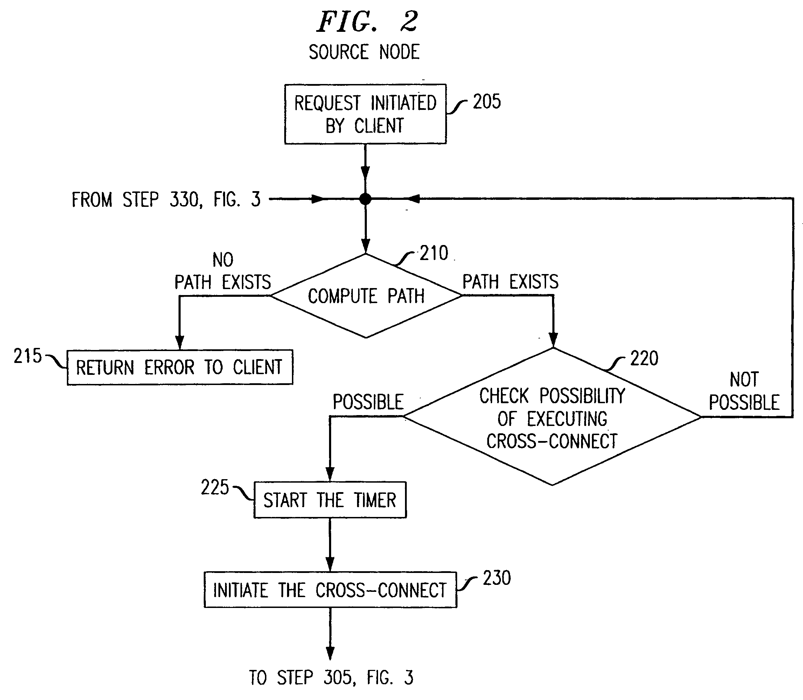

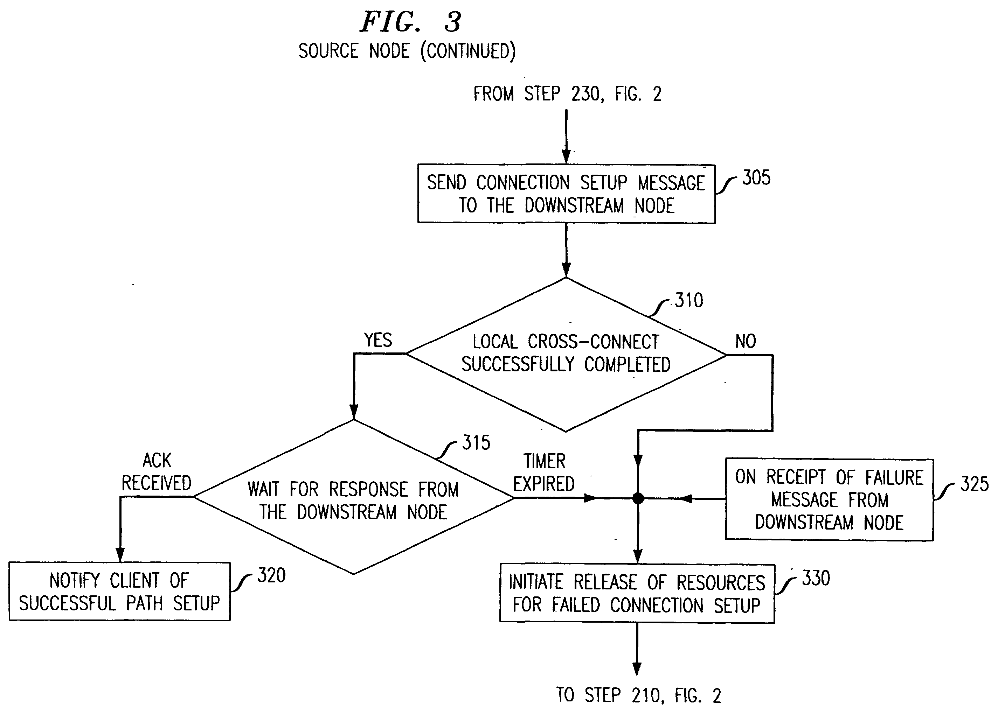

FIG. 1 illustrates the inventive concept for a sample connection setup in DCN 100 along signaling path 101 (A-B-E-D). In addition, FIG. 1 shows the corresponding transport path, 201, in OTN 200. With respect to this sample connection setup it is assumed that OXC A is the source node, OXC D is the destination node, and the remaining nodes, OXC B and OXC E, are intermediate nodes. For the purpose of illustrating the invention, it is assumed that a connection setup is initiated from the source node, as represented in FIG. 1 by OXC A, which receives a request through an external interface such as the network management system (not shown) or from a client such as an IP router (not shown). It is assumed that the OXCs are connected through dense wavelength division multiplexed (DWDM) links. As used herein, "downstream" refers to the flow of communications in the direction of the destination node, while "upstream" refers to the flow of communications in the direction of the source node. As such, an "upstream node" is a node that is closer to the source node, than the current node; while a "downstream node" is a node that is closer to the destination node, than the current node. Turning now to FIGs. 2 - 6, illustrative flowcharts are shown embodying the principles of the invention.

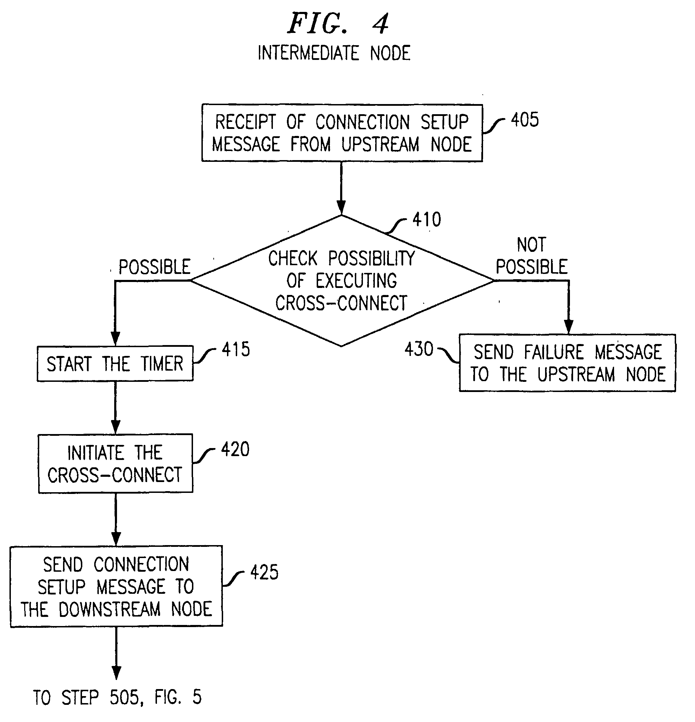

FIGs. 2 and 3 represent a sequence of steps illustratively performed in the source node (here, OXC A). In step 205, OXC A receives a connection request initiated by a client. OXC A then computes a connection path in step 210. If no path exists, OXC A returns an error to the client in step 215. Conversely, if a path does exist, OXC A checks the possibility of executing a cross-connect in step 220. For example, OXC A selects a fiber (port) and a wavelength for connecting to OXC B. If that fiber and wavelength are not available, OXC A attempts to compute another path to the destination node, OXC D, by returning to step 210. However, if the cross-connect is possible, OXC A starts a timer in step 225 and initiates the cross-connect in step 230. In step 305, OXC A sends a connection setup message to the downstream node, OXC B. In step 310, OXC A checks if the local cross-connect, i.e., the cross-connect with OXC A, was successfully completed. If the local cross-connect was not successfully completed, OXC A initiates a release of resources for a failed connection setup in step 330. This release includes notification of downstream nodes to abort the connection. OXC A then attempts to compute another path to the destination node, OXC D, by returning to step 210. On the other hand, if the local cross-connect was successfully completed, OXC A waits for a response from the downstream node, OXC B in step 315. If the timer (which was set in step 225), expires, or a failure message is received from a downstream node in step 325, OXC executes step 330, as described above, and attempts to compute another path. However, if an acknowledgment (ACK) response is received from the downstream node, OXC B, OXC A notifies the client of the successful connection setup in step 320. (It should be noted that other error conditions may occur, but are not shown in the flow charts for simplicity. For example, receipt of the failure message in step 325 could occur after the timer expires and after the performance of step 330.)

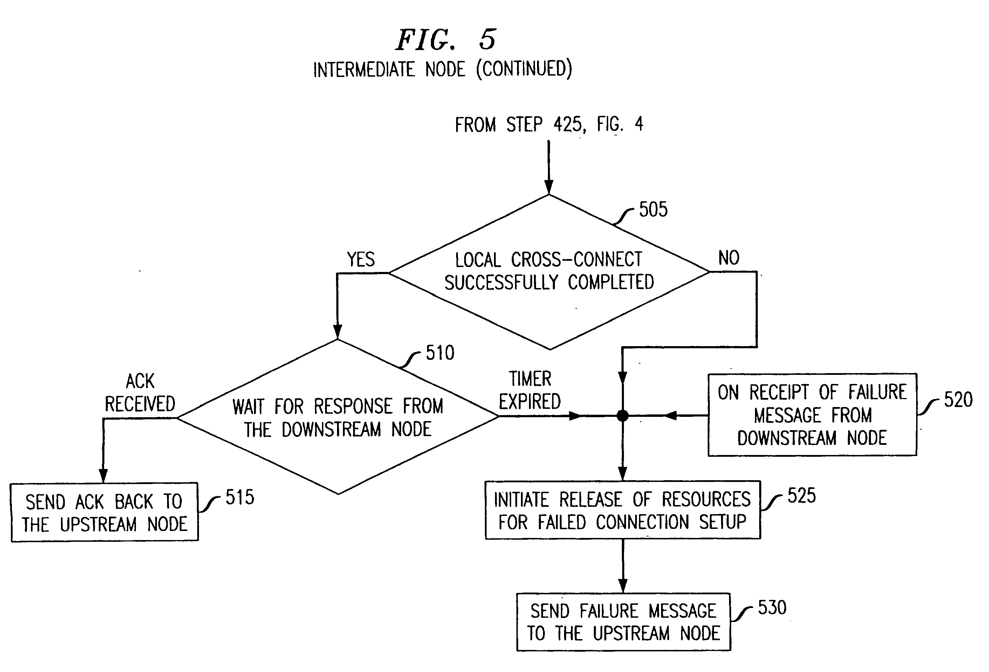

FIGs. 4 and 5 represent a sequence of steps illustratively performed in an intermediate node (here, OXC B, OXC E). When an intermediate node receives a connection setup message in step 405, the intermediate node checks the possibility of executing a cross-connect in step 410. If it is not possible to execute the cross-connect, the intermediate node sends a failure message to the upstream node (a node that is closer to the source node, than the current node) in step 430. However, if the cross-connect is possible, the intermediate node starts a timer in step 415 and initiates the cross-connect in step 420. In step 425, the intermediate node sends a connection setup message to the downstream node (a node that is closer to the destination node, than the current node). In step 505, the intermediate node checks if the local cross-connect was successfully completed. If the local cross-connect was not successfully completed, the intermediate node initiates a release of resources for a failed connection setup in step 525. This release includes notification of downstream nodes to abort the connection. The intermediate node sends a failure message to the upstream node in step 530. On the other hand, if the local cross-connect was successfully completed, the intermediate node waits for a response from the downstream node in step 510. If the timer (which was set in step 415) expires, or a failure message is received from a downstream node in step 520, the intermediate node executes steps 525 and 530, as described above. However, if an acknowledgment response is received from the downstream node, the intermediate node sends the acknowledgement to the upstream node in step 515. In effect, and as described above, each intermediate node performs three distinct activities. One is a soft reservation of connection resources such as link wavelengths, a second is the actual activation of the cross-connects, and a third is the processing of the signaling messages.

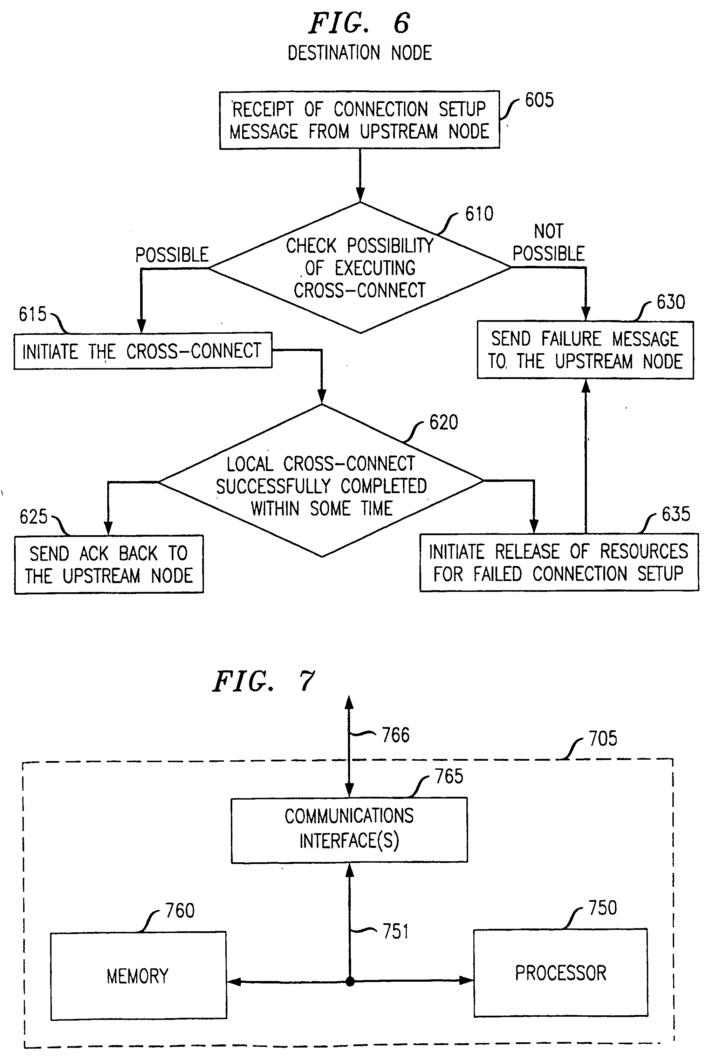

FIG. 6 represent a sequence of steps illustratively performed in the destination node (here, OXC D).

When the destination node receives a connection setup message in step 605, the destination node checks the possibility of executing a cross-connect in step 610. If it is not possible to execute the cross-connect, the destination node sends a failure message to the upstream node in step 630. However, if the cross-connect is possible, the destination node initiates the cross-connect in step 615. In step 620, the destination node checks if the local cross-connect was successfully completed. If the local cross-connect was not successfully completed, the destination node initiates a release of resources for a failed connection setup in step 635 and sends a failure message to the upstream node in step 630. On the other hand, if the local cross-connect was successfully completed, the destination node sends an acknowledgement to the upstream node in step 625.

As described above, the source node first reserves local resources and then initiates the local cross-connect action. However, the source node does not wait for the local cross-connect to complete and, instead, sends a connection setup message to the next node in the path. All intermediate nodes that receive the setup message first check that the appropriate cross-connect is possible and, if so, initiate their local cross-connect and at the same time forward the setup message to their next node, downstream. In case the cross-connect is not possible (because the wavelength/port resource has been taken by some other connection), the setup operation gets terminated and a message is sent back to the upstream nodes to instruct them to undo or abort the cross-connect operations related to the ongoing connection setup. The source node and each intermediate node also initiate a local timer related to the cross-connection operation. When the message reaches the destination node, the possibility of the appropriate cross-connect is checked. If resources are available, the cross-connect is initiated but no ACK message is generated until the cross-connect is completed. It should be noted that receipt of an ACK message by a node implies that all downstream nodes in the path have already executed the cross-connect. In case of either the unavailability of resources to execute the cross-connect, or failure to execute a cross-connect within a specified interval of time, the connection setup operation is terminated and a failure message is sent upstream to undo/abort the connection.

Variations on the above-described connection strategy (referred to herein as S1) are possible. Having described the inventive concept, these alternative strategies are straightforward modifications to the above-described flow charts, which, as such, are not described herein. For example, the following connection setup strategy (referred to herein as S2) may be used. In S2, the forward pass (downstream direction) is used only for reservation of local resources and the cross-connects across the OXC nodes are executed sequentially in the reverse pass (upstream direction) only. In this case, each OXC node in the path has to wait for the cross-connect operation to complete before forwarding the signaling message since there is no additional pass to check for the success of this cross-connect operation. This has an important implication on the connection set-up time (described below).

Another alternative connection strategy (referred to herein as *S3*) is one where reservation is done as a separate phase in addition to, and before, the path setup scheme described above in *S1*. Hence, the first round trip simply carries out local resource reservation (e.g., for an intermediate node, step 410 of FIG. 4) and the second setup roundtrip carries out the cross-connects (e.g., for an intermediate node, step 420 of FIG. 4) in accordance with *S1*.

Having described the inventive concept, some observations can be made about the resulting connection setup time performance. First, the following assumptions are made with respect to the relative timing of the reservation of resources, signaling message processing and cross-connect execution. The amount of time needed for making a reservation is neglected since this typically involves only writing some tables in memory and marking certain resources as assigned and in use. Signaling message processing may include processing related to a signaling stack such as RSVP (Resource ReSerVation Protocol) or CR-LDP (constraint-based routing label distribution protocol) used to setup connections. Cross-connect execution mainly includes sending messages to a device to convert a cross-connect map (such as connect port 1 to port 10) to an analog signal to actually execute the cross-connect. In addition, depending upon a particular system architecture this may include committing the cross-connect map to a database. Finally, the following definitions are made:

N - the number of nodes in the connection path;
X - signaling message processing time for a node;
Y - cross-connection execution time for a node; and
L - round-trip delay (assumed fixed) for a particular connection path due to propagation and transmission delays.

In light of the above assumptions and definitions, the setup time for *S1* is:

$$S1 \text{ setup time} = (2NX) + Y + L.$$

This can be easily seen by considering the actions at the destination node. Since the destination node has to wait for the completion of the cross-connect action, the total setup time at that node is $X + Y$. When the ACK message arrives at an intermediate node, one is assured of completion of the cross-connect operation at that intermediate node since the cross-connect operation takes $Y$ units and was initiated at least $X + Y$ time units back (consider the node just upstream from the destination node). Hence, it can be observed that the *cross-connect operation* can be completely *pipelined* in this connection strategy and only *one cross-connect* time worth of delay is incurred regardless of the number of nodes $N$ in the connection path. Clearly, when the cross-connect time is significant (e.g., where $X \ll Y$) this is a powerful strategy. Alternately, this strategy can tolerate a large cross-connect time without significant penalty in setup time. This observation may also aid in the design of simple and inexpensive optical cross-connects with slower cross-connect times and still provide superior connection setup performance.

It should be noted that the connection setup strategy *S1* may experience some performance degradation in case of excessive crankbacks (e.g., if cross-connects cannot be completed) and when the cross-connect execution time $Y$ is large. It should be noted that this should not be an issue for a guaranteed restoration scheme since the network capacity will be reserved and available for restoration. The reason for performance degradation in case of crankbacks is due to the fact that undoing a cross-connect is of the same time order as executing a cross-connect and can be expensive. Such operations become necessary if, in an under-engineered network, the availability of the path resources is not verified and reserved prior to executing the cross-connects.

In terms of the alternative connection strategies mentioned above, the following observations can also be made about their respective connection setup time performance. With respect to *S2*, a cross-connect execution is done sequentially. As such, the setup time in the forward pass (excluding fixed delays such as propagation) is:

$$S2 \text{ setup time, forward pass} = N(X + Y).$$

There are two options for the reverse pass. If the acknowledgment message is sent directly to the source node and does not pass through (or is not processed) at intermediate nodes, the ACK message does not incur any signaling message processing time at these intermediate nodes. In this variation, labeled as *S2a*, the total setup time includes the round trip delay, *L,* and is:

$$S2a \text{ total setup time} = N(X + Y) + L.$$

However, another variation is possible, labeled as *S2b,* if the ACK message is processed at intermediate nodes on the reverse pass. In this case, the total setup time includes not only the round trip delay $L$, but additional $N(X)$ processing on the reverse pass, and is:

$$S2b \text{ total setup time} = 2NX + NY + L.$$

It should be noted that there is no necessity to process the acknowledgment at intermediate nodes since the cross-connect operations are initiated and completed in the forward pass. (This option would be adopted only for simplicity of implementation as it does not require a separate mechanism to propagate the ACK message directly to the source node.)

From the above setup time comparisons, it can be observed that *S2b* always performs worse than the *S1* in terms of setup time. Strategy *S2a* performs worse than *S1* when $N(Y) > ((N)(X) + Y)$ or alternately when $Y > (((N)(X))/(N - 1))$ and better otherwise. Note that for large *N,* the latter is approximately the same as $Y > X$ and hence when the cross-connect time *Y* is large compared to the message processing time *X,* strategy *S1* is the appropriate choice.

Finally, the following observations can be made about the connection setup time performance of *S3*. In this case, the first round-trip consists simply of reservation. This takes $(N)(X) + L$ time units. In the second pass, pipelined cross-connect execution is performed. This takes $(2)(N)(X) + Y + L$ time units. This results in a total connection setup time of:

$$S3 \text{ total setup time} = (3)(N)(X) + Y + (2)(L).$$

Clearly, this strategy is worse than strategy *S1*. Compared to strategy *S2a, S3* performs worse if $((2)(N)(X) + Y + L) > ((N)(Y))$. Note that the latter is always true when $Y < ((2)(X) + L/N)$ and for higher values one would need to check with specific values. Compared to *S2b, S3* performs better if $((N - 1)Y) > ((N)(X) + L)$. This is likely to be true for large *Y* compared to *X.* Hence strategy *S3* is likely to be intermediate in performance compared to *S1* and *S2* when *Y* is large compared to *X.* However, this strategy has some advantages over *S1* in case of crankbacks since resources are reserved in advance and no undoing of cross-connects is needed.

Turning briefly to FIG. 7, a high-level block diagram of a representative node 705 for use in accordance with the principles of the invention is shown. Node 705 is a stored-program-control based processor architecture and includes processor 750, memory 760 (for storing program instructions and data, e.g., for implementing (among other functions not described herein) any of the illustrative flow charts described above and shown in FIGs. 2 - 6) and communications interface(s) 765 for coupling to one or more communication paths as represented by path 766 (e.g., communication(s) interface 765 represents an optical dense wavelength division multiplexer (DWDM)).

In light of the above, a method and apparatus have been described that provides for fast setup of optical connection paths between a pair of source and destination OXC nodes in an IP-controlled OXC-based optical transport network. Fast setup is key to fast restoration of the increasing number of mission-critical applications being supported in telecommunication networks.

The foregoing merely illustrates the principles of the invention and it will thus be appreciated that those skilled in the art will be able to devise numerous alternative arrangements which, although not explicitly described herein, embody the principles of the invention and are within its scope. For example, although described in the context of an IP controlled OXC-based optical transport network, the inventive concept is applicable to transport networks in general (utilizing an optical fabric and/or an electrical fabric) such as, but not limited to, PDH (Plesiochronous Digital Hierarchy); SONET (Synchronous Optical Network); SDH (Synchronous Digital Hierarchy), optical and other future transport network technologies. Also, although illustrated in the context of an out-of-band signaling network, the inventive concept is applicable to an in-band signaling network as well.

**Claims**

1. A method for use in a node of a network during a connection setup (405) between a source node (OXC A) and a destination node (OXC D), the method **CHARACTERIZED BY**

   initiating (420) a cross-connect with an adjacent node;

   sending a connection setup message to a next node before completion of the cross-connect; and

   completing (505) the cross-connect with the adjacent node without waiting for completion of any downstream cross-connects.

2. The method according to claim **1,** wherein the network is an optical transport network.

3. The method according to claim **1**, wherein the connection setup is selected from the group consisting of a wavelength-based connection setup, a SONET-based connection setup, a SDH-based connection setup, and a PDH-based connection setup.

4. Apparatus comprising:

   a communications interface (765) for providing signaling to a downstream node and for receiving signaling from an upstream node; and

   a processor (750), **CHARACTERIZED IN THAT,** responsive to receipt of a connection setup message (405) from the upstream node, the processor performs a cross-connect (420) with the downstream node and sends a next connection set-up message to a next node prior to receipt of a signaling message from the downstream node related to a status of at least another cross-connect operation related to the connection setup.

5. The apparatus according to claim **4,** wherein the upstream node and the downstream node are in an optical transport network.

6. The apparatus according to claim **5,** wherein the cross-connect is selected from the group consisting of an electrical-based cross-connect and a transparent wavelength-based optical cross-connect.

7. The apparatus according to claim **4,** wherein the connection setup is selected from the group consisting of a wavelength-based connection setup, a SONET-based connection setup, a SDH-based connection setup, and a PDH-based connection setup.

8. The apparatus according to claim **4,** wherein the signaling occurs out-of-band.

9. The apparatus according to claim **4,** wherein the signaling occurs in-band.

**Patentansprüche**

1. Verfahren zur Verwendung in einem Knoten eines Netzes während eines Verbindungsaufbaus (405) zwischen einem Quellknoten (OXC A) und einem Zielknoten (OXC D), wobei das Verfahren **gekennzeichnet ist durch**
   Initiieren (420) eines Crossconnects mit einem benachbarten Knoten;
   Senden einer Verbindungsaufbaumeldung an einen nächsten Knoten vor der Beendigung des Cross-connects und
   Beenden (505) des Crossconnects mit dem benachbarten Knoten ohne Warten auf eine Beendigung irgendwelcher nachgeschalteter Crossconnects.

2. Verfahren nach Anspruch 1, wobei das Netz ein optisches Transportnetz ist.

3. Verfahren nach Anspruch 1, wobei der Verbindungsaufbau ausgewählt ist aus der Gruppe bestehend aus einem wellenlängen-basierten Verbindungsaufbau, einem SONET-basierten Verbindungsaufbau, einem SDH-basierten Verbindungsaufbau und einem PDH-basierten Verbindungsaufbau.

4. Vorrichtung, die folgendes umfaßt:

   eine Kommunikationsschnittstelle (765) zur Bereitstellung von Signalisierung zu einem nachgeschalteten Knoten und zum Empfangen von Signalisierung von einem vorgeschalteten Knoten und
   einen Prozessor (750), **gekennzeichnet dadurch, daß** der Prozessor als Reaktion auf den Empfang einer Verbindungsaufbaumeldung (405) von dem vorgeschalteten Knoten einen Crossconnect (420) mit dem nachgeschalteten Knoten ausführt und eine nächste Verbindungsaufbaumeldung zu einem nächsten Knoten vor dem Empfang einer Signalisierungsmeldung von dem nachgeschalteten Knoten hinsichtlich eines Status mindestens einer anderen Crossconnectoperation hinsichtlich des Verbindungsaufbaus sendet.

5. Vorrichtung nach Anspruch 4, wobei der vorgeschaltete Knoten und der nachgeschaltete Knoten sich in einem optischen Transportnetz befinden.

6. Vorrichtung nach Anspruch 5, wobei der Cross-connect ausgewählt ist aus der Gruppe bestehend aus einem elektrisch basierten Crossconnect und einem transparenten wellenlängen-basierten optischen Crossconnect.

7. Vorrichtung nach Anspruch 4, wobei der Verbindungsaufbau ausgewählt ist aus der Gruppe bestehend aus einem wellenlängen-basierten Verbindungsaufbau, einem SONET-basierten Verbindungsaufbau, einem SDH-basierten Verbindungsaufbau und einem PDH-basierten Verbindungsaufbau.

8. Vorrichtung nach Anspruch 4, wobei die Signalisierung außerhalb des Bands auftritt.

9. Vorrichtung nach Anspruch 4, wobei die Signalisierung innerhalb des Bands auftritt.

**Revendications**

1. Procédé pour une utilisation dans un noeud d'un réseau pendant un établissement de connexion (405) entre un noeud source (OXC A) et un noeud destinataire (OXC D), le procédé étant **CARACTERISE PAR**
   un lancement (420) d'une interconnexion avec un noeud adjacent ;
   un envoi d'un message d'établissement de connexion à un noeud suivant avant la réalisation de l'interconnexion ; et
   une réalisation (505) de l'interconnexion avec le noeud adjacent sans attendre la réalisation d'interconnexions en aval quelconques.

2. Procédé selon la revendication 1, dans lequel le réseau est un réseau de transport optique.

**3.** Procédé selon la revendication 1, dans lequel l'établissement de connexion est choisi parmi le groupe consistant en un établissement de connexion par longueur d'onde, un établissement de connexion de type SONET, un établissement de connexion de type SDH et un établissement de connexion de type PDH.

**4.** Appareil comprenant :

une interface de communication (765) pour fournir une signalisation à un noeud en aval et pour recevoir une signalisation d'un noeud en amont ; et
un processeur (750), **CARACTERISE EN CE QUE**, en réaction à la réception d'un message d'établissement de connexion (405) d'un noeud en amont, le processeur effectue une interconnexion (420) avec le noeud en aval et envoie un message d'établissement de connexion suivant à un noeud suivant avant la réception d'un message de signalisation du noeud en aval lié à un état d'au moins une autre opération d'interconnexion liée à l'établissement de connexion.

**5.** Appareil selon la revendication 4, dans lequel le noeud en amont et le noeud en aval sont dans un réseau de transport optique.

**6.** Appareil selon la revendication 5, dans lequel l'interconnexion est choisie parmi le groupe consistant en une interconnexion de type électrique et une interconnexion optique transparente par longueur d'onde.

**7.** Appareil selon la revendication 4, dans lequel l'établissement de connexion est choisi parmi le groupe consistant en un établissement de connexion par longueur d'onde, un établissement de connexion de type SONET, un établissement de connexion de type SDH et un établissement de connexion de type PDH.

**8.** Appareil selon la revendication 4, dans lequel la signalisation se produit hors bande.

**9.** Appareil selon la revendication 4, dans lequel la signalisation se produit intrabande.

## FIG. 1

IP CONTROL PLANE
DCN 100

B

C

A

101

D

F

E

OTN 200

OXC B

OXC C

OXC A

201

OXC D

OXC F

OXC E

CONNECTION SETUP

EP 1 282 331 B1

9

## FIG. 2
SOURCE NODE

```
          ┌─────────────────┐
          │ REQUEST INITIATED │──── 205
          │    BY CLIENT      │
          └─────────────────┘
                   │
                   ▼
FROM STEP 330, FIG. 3 ──────►●◄──────────────────────────────┐
                   │                                          │
                   ▼                                          │
         NO       ◇ 210                                       │
    PATH EXISTS  ◇     ◇   PATH EXISTS                        │
     ◄──────────◇ COMPUTE PATH ◇──────────┐                   │
                 ◇     ◇                   │                   │
                  ◇   ◇                    ▼                   │
                                          ◇ 220               │
┌──────────────────────┐        POSSIBLE ◇    ◇    NOT        │
│ RETURN ERROR TO CLIENT │◄──────◄ CHECK POSSIBILITY ◇ POSSIBLE┘
└──────────────────────┘    │   ◇ OF EXECUTING   ◇
  215                       │   ◇ CROSS-CONNECT ◇
                            ▼    ◇     ◇
                  ┌──────────────┐
             225 ─│ START THE TIMER │
                  └──────────────┘
                           │
                           ▼
              ┌──────────────────────────┐
              │ INITIATE THE CROSS-CONNECT │──── 230
              └──────────────────────────┘
                           │
                           ▼
                  TO STEP 305, FIG. 3
```

EP 1 282 331 B1

## FIG. 3

SOURCE NODE (CONTINUED)

FROM STEP 230, FIG. 2

SEND CONNECTION SETUP MESSAGE TO THE DOWNSTREAM NODE — 305

LOCAL CROSS—CONNECT SUCCESSFULLY COMPLETED — 310

YES

NO

WAIT FOR RESPONSE FROM THE DOWNSTREAM NODE — 315

ACK RECEIVED

TIMER EXPIRED

ON RECEIPT OF FAILURE MESSAGE FROM DOWNSTREAM NODE — 325

NOTIFY CLIENT OF SUCCESSFUL PATH SETUP — 320

INITIATE RELEASE OF RESOURCES FOR FAILED CONNECTION SETUP — 330

TO STEP 210, FIG. 2

EP 1 282 331 B1

## FIG. 4
### INTERMEDIATE NODE

RECEIPT OF CONNECTION SETUP
MESSAGE FROM UPSTREAM NODE — 405

↓

CHECK POSSIBILITY
OF EXECUTING
CROSS-CONNECT — 410

POSSIBLE ←→ NOT POSSIBLE

START THE TIMER — 415

↓

INITIATE THE
CROSS-CONNECT — 420

↓

SEND CONNECTION
SETUP MESSAGE TO
THE DOWNSTREAM NODE — 425

↓

TO STEP 505, FIG. 5

430 — SEND FAILURE MESSAGE
TO THE UPSTREAM NODE

# FIG. 5
INTERMEDIATE NODE (CONTINUED)

FROM STEP 425, FIG. 4

LOCAL CROSS-CONNECT SUCCESSFULLY COMPLETED — 505

YES

NO

WAIT FOR RESPONSE FROM THE DOWNSTREAM NODE — 510

ACK RECEIVED

TIMER EXPIRED

ON RECEIPT OF FAILURE MESSAGE FROM DOWNSTREAM NODE — 520

SEND ACK BACK TO THE UPSTREAM NODE — 515

INITIATE RELEASE OF RESOURCES FOR FAILED CONNECTION SETUP — 525

SEND FAILURE MESSAGE TO THE UPSTREAM NODE — 530

EP 1 282 331 B1

## FIG. 6
### DESTINATION NODE

RECEIPT OF CONNECTION SETUP MESSAGE FROM UPSTREAM NODE — 605

CHECK POSSIBILITY OF EXECUTING CROSS-CONNECT — 610

POSSIBLE

NOT POSSIBLE

615 — INITIATE THE CROSS-CONNECT

630 — SEND FAILURE MESSAGE TO THE UPSTREAM NODE

LOCAL CROSS-CONNECT SUCCESSFULLY COMPLETED WITHIN SOME TIME — 620

625 — SEND ACK BACK TO THE UPSTREAM NODE

635 — INITIATE RELEASE OF RESOURCES FOR FAILED CONNECTION SETUP

## FIG. 7

766

705

765 — COMMUNICATIONS INTERFACE(S)

751

760 — MEMORY

750 — PROCESSOR